(19) 

Europäisches
Patentamt
European
Patent Office
Office européen
des brevets

(11) **EP 2 477 347 A1**

(12) **EUROPEAN PATENT APPLICATION**
published in accordance with Art. 153(4) EPC

(43) Date of publication:
**18.07.2012 Bulletin 2012/29**

(21) Application number: **10813340.6**

(22) Date of filing: **31.08.2010**

(51) Int Cl.:
*H04B 10/08* (2006.01)      *H04J 14/02* (2006.01)

(86) International application number:
**PCT/CN2010/076485**

(87) International publication number:
**WO 2011/026418 (10.03.2011 Gazette 2011/10)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **03.09.2009  CN 200910170116**

(71) Applicant: **ZTE Corporation
Shenzhen, Guangdong 518057 (CN)**

(72) Inventors:
  • **WANG, Fangwei
    Shenzhen
    Guangdong 518057 (CN)**

  • **KANG, Kai
    Shenzhen
    Guangdong 518057 (CN)**

(74) Representative: **Hutchinson, Glenn Stanley
    Harrison Goddard Foote
    Fountain Precinct
    Balm Green
    Sheffield
    S1 2JA (GB)**

(54) **DEVICE AND METHOD FOR PERFORMING WAVE BAND REGULATION ON DISPERSION COMPENSATOR**

(57)    Present invention discloses a device and a method for regulating a wave band of a dispersion compensator. The device comprises a central control module, a wavelength regulation temperature control module and a feedback voltage detection module. The method comprises the steps of: determining a temperature value corresponding to a target wavelength to be configured, determining a corresponding wavelength regulation set voltage value according to the temperature value, performing digital-to-analogue conversion on the voltage value; determining a current wavelength regulation feedback voltage value according to a current resistance value of a Resistance Temperature Detector (RTD) in the dispersion compensator; and regulating the potential relationship between wavelength regulation temperature control pins of the dispersion compensator according to the wavelength regulation set voltage value obtained after the digital-to-analogue conversion and the current wavelength regulation feedback voltage value. The schemes provided by present invention enable the system to realize the wavelength tuning of a full C wave band by only one dispersion compensator, greatly lower the cost of the entire system and increase the flexibility of the system.

Fig. 1

EP 2 477 347 A1

**Description**

**Field of the Invention**

Present invention relates to the field of optical networks, and in particular to a device and a method for regulating a wave band of a dispersion compensator.

**Background of the Invention**

With the commercialization of Dense Wavelength Division Multiplexing (DWDM) products and equipment of 1.6Tbit/s and 800Gbit/s, it can be envisaged that, such high transmission capacity inevitably requires that the number of system channels should be increased to 100-200 wavelengths, the wavelength interval should be reduced necessarily, and the interval of 200GHZ to 100GHZ in accordance with the International Telecommunication Union Telecommunication Standardization Sector (ITU-T) Standards under original few wavelength channels will become the interval of 50GHZ, and even 25GHZ in accordance with the ITU-T Standards under numerous wavelength channels. But in the conventional art, quite many dispersion compensators are still at the interval of 200GHZ. The system needs four dispersion compensators of different wavelengths to realize the interval of 50GHZ. This brings great inconvenience for research and development, production and application, also makes the network management more complex and lack of configuration flexibility.

**Summary of the Invention**

Accordingly, the one goal of the invention is to provide a device and a method for regulating a wave band of a dispersion compensator to realize the wavelength tuning of a full C wave band of the dispersion compensator.

In order to solve the above technical problem, the technical schemes of present invention are realized as follows:

A device for regulating wave band of dispersion compensator comprises:

a central control module, configured to determine a temperature value corresponding to a target wavelength to be configured, determine a corresponding wavelength regulation set voltage value according to the temperature value, and output the voltage value to a wavelength regulation temperature control module through a Digital-to-Analogue Converter (DAC);
a feedback voltage detection module, configured to determine a corresponding wavelength regulation feedback voltage value according to a current resistance value of a Resistance Temperature Detector (RTD) in the dispersion compensator, and input the wavelength regulation feedback voltage value to the wavelength regulation temperature control module; and
a wavelength regulation temperature control module, which is configured to regulate the potential relationship between wavelength regulation temperature control pins of the dispersion compensator according to the input wavelength regulation set voltage value and the input wavelength regulation feedback voltage value.

The device also comprises a dispersion compensation temperature control module;
the central control module is also configured to determine a temperature value corresponding to a target dispersion value to be configured, determine a corresponding dispersion regulation set voltage value according to the temperature value, and output the voltage value to the dispersion compensation temperature control module through the DAC;
the feedback voltage detection module is also configured to determine a corresponding dispersion regulation feedback voltage value according to the current resistance value of the RTD in the dispersion compensator, and input the dispersion regulation feedback voltage value to the dispersion compensation temperature control module;
the dispersion compensation temperature control module is configured to regulate the potential relationship between dispersion compensation temperature control pins of the dispersion compensator according to the dispersion regulation set voltage value input by the central control module and the dispersion regulation feedback voltage value input by the feedback voltage detection module.

The dispersion compensation temperature control module is also configured to feed back a level signal, which indicates the temperature value is locked, to the central control module when the difference between the input dispersion regulation set voltage value and the correspondingly input dispersion regulation feedback voltage value is zero, indicating the end of dispersion regulation.

The wavelength regulation temperature control module is also configured to feed back a level signal, which indicates the temperature value is locked, to the central control module when the difference between the input wavelength regulation set voltage value and the input wavelength regulation feedback voltage value is zero, indicating the end of wavelength regulation.

A method for regulating wave band of dispersion compensator comprises the following steps:

A, determining a temperature value corresponding to a target wavelength to be configured, determining a corresponding wavelength regulation set voltage value according to the temperature value, and performing digital-to-analogue conversion on the voltage value;

B, determining a current wavelength regulation feedback voltage value according to a current resistance value of an RTD in the dispersion compensator; and

C, regulating the potential relationship between wavelength regulation temperature control pins of the dispersion compensator according to the wavelength regulation set voltage value obtained after the digital-to-analogue conversion and the current wavelength regulation feedback voltage value.

The Step A also comprises the steps of determining a temperature value corresponding to a target dispersion value to be configured, determining a corresponding dispersion regulation set voltage value according to the temperature value, and performing digital-to-analogue conversion on the voltage value; the Step B also comprises the step of determining a current dispersion regulation feedback voltage value according to the current resistance value of the RTD in the dispersion compensator; the Step C also comprises the step of regulating the potential relationship between dispersion compensation temperature control pins of the dispersion compensator according to the dispersion regulation set voltage value obtained after the digital-to-analogue conversion and the current dispersion regulation feedback voltage value.

The step of determining the temperature value corresponding to the target dispersion value to be configured comprises the step of determining the temperature value corresponding to the target dispersion value to be configured from a dispersion temperature corresponding table corresponding to the dispersion compensator.

In Step C, the dispersion regulation is ended when the difference between the dispersion regulation set voltage value and the corresponding dispersion regulation feedback voltage value is zero.

The step of determining the temperature value corresponding to the target wavelength to be configured comprises the step of determining the temperature value corresponding to the target wavelength to be configured according to a central wavelength of the dispersion compensator, the target wavelength to be configured and a wavelength regulation parameter of the dispersion compensator.

In Step C, the wavelength regulation is ended when the difference between the wavelength regulation set voltage value and the wavelength regulation feedback voltage value is zero.

The beneficial effects of present invention are as follows:

The technical schemes of present invention enable a single plate to install the dispersion compensator with a tunable wavelength, enable the central wavelength in the dispersion compensator to move left or right by controlling the potential relationship between the wavelength regulation pins of the dispersion compensator, so as to enable the system to realize the wavelength tuning and the dispersion compensation of the full C wave band by only one dispersion compensator, and only one parameter needs to be modified when anyone wavelength is required, instead of changing the dispersion compensator, thereby greatly lowering the cost of the entire system and increasing the flexibility of the system, which is simple and easy to carry out.

Additionally, the technical schemes of present invention can also achieve dispersion control on optical signals by controlling the potential (electric potential) relationship between the dispersion compensation control pins of the dispersion compensator to make the functions of the dispersion compensator more perfect to meet various requirements.

## Brief Description of the Drawings

Fig. 1 is a structure schematic block diagram of a device for regulating wave band of dispersion compensator of present invention;

Fig. 2 is a flowchart of a realization principle of a method for regulating wave band of dispersion compensator of present invention;

Fig. 3 is a structure schematic block diagram of a device for regulating wave band of dispersion compensator in the embodiment;

Fig. 4 is a circuit schematic diagram of a voltage detection circuit in a feedback voltage detection module in present embodiment; and

Fig. 5 is a structure schematic diagram of all functional units configured to realize temperature control in present embodiment.

**Detailed Description of the Embodiments**

The main technical thought of the invention is to enable the central wavelength in the dispersion compensator to move left or right by controlling the level (electrical level) relationship between the wavelength regulation pins of the dispersion compensator to realize the wavelength tuning of the full C wave band of the dispersion compensator. Further, it is also possible to achieve dispersion control on optical signals by controlling the potential relationship between the dispersion compensation control pins of the dispersion compensator.

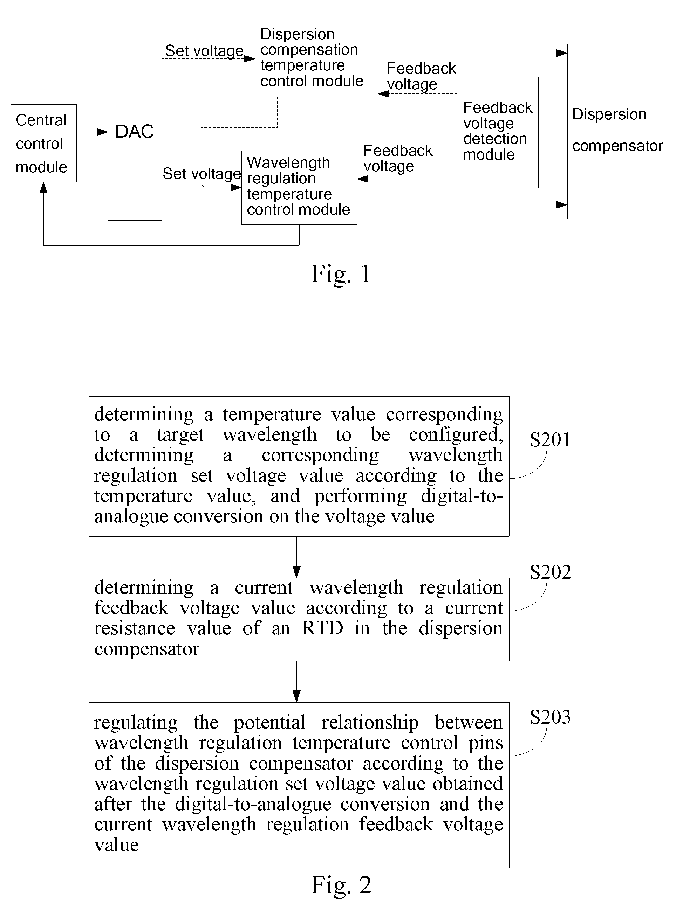

Referring to Fig. 1, which is a structure schematic diagram of a device for regulating wave band of dispersion compensator of present invention, the device mainly comprises a central control module, a wavelength regulation temperature control module and a feedback voltage detection module, in which,

the central control module is configured to determine a temperature value corresponding to a target wavelength to be configured, determine a corresponding wavelength regulation set voltage value according to the temperature value, and output the voltage value to the wavelength regulation temperature control module through a DAC (Digital-to-Analogue Converter);

the feedback voltage detection module is configured to determine a corresponding wavelength regulation feedback voltage value according to a current resistance value of an RTD (Resistance Temperature Detector) in the dispersion compensator, and input the wavelength regulation feedback voltage value to the wavelength regulation temperature control module; and

the wavelength regulation temperature control module is configured to regulate the potential relationship between wavelength regulation temperature control pins of the dispersion compensator according to the input wavelength regulation set voltage value and the input wavelength regulation feedback voltage value, and feed back a level signal, which indicates the temperature value is locked, to the central control module when the difference between the input wavelength regulation set voltage value and the input wavelength regulation feedback voltage value is zero, indicating the end of wavelength regulation.

Further, in order to enable the dispersion compensator to realize dispersion control on optical signals, the device for regulating wave band of dispersion compensator of present invention also comprises a dispersion compensation temperature control module;

the central control module is also configured to determine a temperature value corresponding to a target dispersion value to be configured, determine a corresponding dispersion regulation set voltage value according to the temperature value, and output the voltage value to the dispersion compensation temperature control module through the DAC;

the feedback voltage detection module is also configured to determine a corresponding dispersion regulation feedback voltage value according to the current resistance value of the RTD in the dispersion compensator, and input the dispersion regulation feedback voltage value to the dispersion compensation temperature control module;

the dispersion compensation temperature control module is configured to regulate the potential relationship between dispersion compensation temperature control pins of the dispersion compensator according to the dispersion regulation set voltage value input by the central control module and the dispersion regulation feedback voltage value input by the feedback voltage detection module, and feed back a level signal, which indicates the temperature value is locked, to the central control module when the difference between the input dispersion regulation set voltage value and the correspondingly input dispersion regulation feedback voltage value is zero, indicating the end of dispersion regulation.

For the above device of present invention, present invention further provides a method for regulating wave band of dispersion compensator. Fig. 2 is a schematic flowchart of a realization principle of a method for regulating wave band of dispersion compensator of the invention, wherein the method mainly comprises the following steps:

S201: determining a temperature value corresponding to a target wavelength to be configured, determining a corresponding wavelength regulation set voltage value according to the temperature value, and performing digital-to-analogue conversion on the voltage value.

In this step, the manner of determining the temperature value corresponding to the target wavelength to be configured comprises the steps of: determining the temperature value corresponding to the target wavelength to be configured according to a central wavelength of the dispersion compensator, the target wavelength to be configured and a wavelength regulation parameter of the dispersion compensator.

S202: determining a current wavelength regulation feedback voltage value according to a current resistance value of an RTD in the dispersion compensator.

S203: regulating the potential relationship between wavelength regulation temperature control pins of the dispersion compensator according to the wavelength regulation set voltage value obtained after the digital-to-analogue conversion and the current wavelength regulation feedback voltage value, and ending the wavelength regulation when the difference between the wavelength regulation set voltage value and the wavelength regulation feedback voltage value is zero.

Further, in order to enable the dispersion compensator to achieve (realize) dispersion control on optical signals, in the method for regulating wave band of dispersion compensator of present invention, S201 also comprises the steps of: determining the temperature value corresponding to the target dispersion value to be configured from a dispersion temperature corresponding table corresponding to the dispersion compensator, determining a corresponding wavelength regulation set voltage value according to the temperature value and performing digital-to-analogue conversion on the voltage value; S202 also comprises the step of determining a current dispersion regulation feedback voltage value according to the current resistance value of the RTD in the dispersion compensator; S203 also comprises the steps of: regulating the potential relationship between dispersion compensation temperature control pins of the dispersion compensator according to the dispersion regulation set voltage value obtained after the digital-to-analogue conversion and the current dispersion regulation feedback voltage value, and ending the dispersion regulation when the difference between the dispersion regulation set voltage value and the corresponding dispersion regulation feedback voltage value is zero.

Hereinafter, the specific realization process of present invention will be further described in detail through one specific embodiment.

Present embodiment describes the device and the method, which enable the central wavelength of the module to move left or right by 50GHZ to reach an interval of 50GHZ through regulating the potential relationship between the wavelength regulation temperature control pins, with respect to the dispersion compensator with the original channel interval of 150GHZ.

In the embodiment, a temperature control circuit of a thermoelectric refrigerator is used as a wavelength regulation temperature control module and a dispersion compensation temperature control module to control the dispersion compensator. The problem to be solved is how to achieve the regulation of the dispersion compensator using a mature temperature control circuit and to achieve the requirements of dispersion compensation and wave band tuning of the dispersion compensator to make the dispersion compensator operate in the dispersion compensation mode necessary for the system and operate in the application of any wavelength.

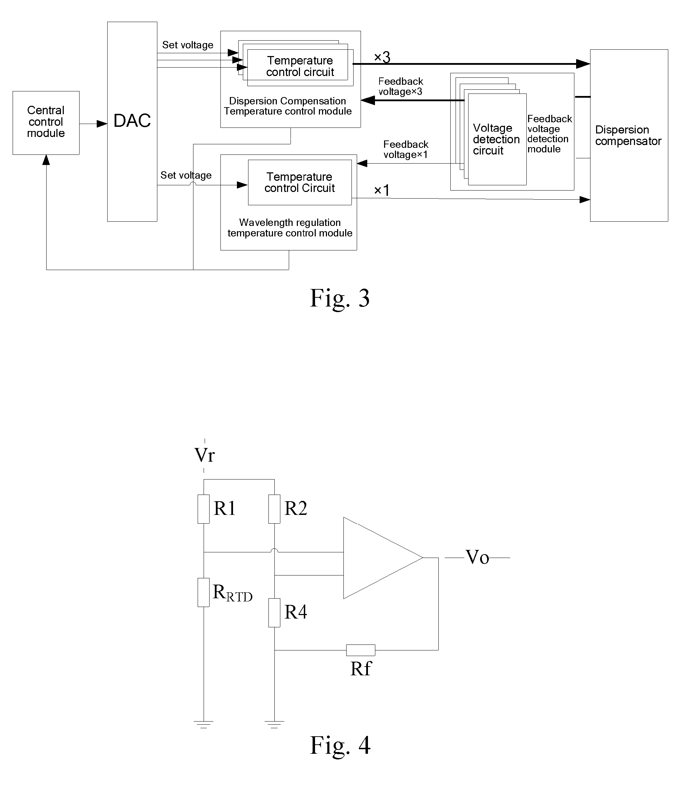

Referring to Fig. 3, which is a structure schematic block diagram of a device for regulating wave band of dispersion compensator in the embodiment of present invention, the device comprises a central control module, a feedback voltage detection module and two temperature control modules in which one is a wavelength regulation temperature control module configured to regulate the wavelength, the other is a dispersion compensation temperature control module configured to perform dispersion regulation. As each wavelength value corresponds to one temperature value, in present embodiment, the wavelength regulation temperature control module is realized by one temperature control circuit. While each dispersion value corresponds to three temperature values, in present embodiment, the dispersion compensation temperature control module is realized by three temperature control circuits. In the embodiment, the feedback voltage detection module contains four voltage detection circuits, each voltage detection circuit corresponding to one temperature control circuit.

The specific process that the device of the invention performs dispersion regulation and wave band regulation on the dispersion compensator is as follows:

1) the central control module searches the temperature value corresponding to the target dispersion value to be configured from a dispersion temperature corresponding table corresponding to the dispersion compensator. The target dispersion value to be configured in present embodiment is 100, and the dispersion temperature corresponding table corresponding to the dispersion compensator is as shown in Table 1. It can be seen through looking up the table that, three temperature values corresponding to the dispersion value of 100 are respectively 37.7 degrees Celsius, 103.5 degrees Celsius, and 70 degrees Celsius.

Table 1

| 196.000 THz | | | |
|---|---|---|---|
| C1=-80 | C2=-150 | C3=34 | |
| | | | |
| D | T1 | T2 | Th |
| 0 | 36.1 | 105.1 | 70 |
| 100 | 37.7 | 103.5 | 70 |
| 200 | 38 | 103.2 | 70 |

(continued)

| D | T1 | T2 | Th |
|---|----|----|----|
| ... | ... | ... | ... |

The central control module then calculates the set voltage value corresponding to the temperature obtained by looking up the table according to the relationship between the resistance value of the RTD in the dispersion compensator and the temperature, as shown in Formula (1), and the relationship between the set voltage and the resistance value of the RTD determined by the circuit relationship of the voltage detection circuit in the feedback voltage detection module, as shown in Formula (2). As the dispersion value corresponds to three temperature values, there are three set voltage values calculated. The circuit schematic diagram of the voltage detection circuit in the feedback voltage detection module in present embodiment is as shown in Fig. 4.

$$R_{RTD} = R_0[1 + AT + BT^2 + CT^3] \qquad (1)$$

Where, T is a temperature value, $R_0$ is 1000Ω, A is 0.0039083, B is -5.775E-07, and C is -4.183E-12.

$$V_O = Vr * R_{RTD}/(R_1 + R_{RTD}) * (1 + R_f/R_2 + R_f/R_4) - Vr * R_f/R_2 \qquad (2)$$

2) The central control module determines the temperature value corresponding to the target wavelength to be configured according to the central wavelength of the dispersion compensator, the target wavelength to be configured and the wavelength regulation parameter of the dispersion compensator (see C1, C2 and C3 in Table 1). The set voltage value corresponding to the temperature value is calculated through Formula (1) and Formula (2).

3) The central control module respectively inputs the three dispersion regulation set voltage values, corresponding to the target dispersion value to be configured, to the three temperature control circuits in the dispersion compensation temperature control module after the digital-to-analogue conversion is performed for the three dispersion regulation set voltage values by the DAC, and at the same time, inputs one wavelength regulation set voltage value, corresponding to the target wavelength to be configured, to the temperature control circuit in the wavelength regulation temperature control module after the digital-to-analogue conversion is performed for the wavelength regulation set voltage value by the DAC.

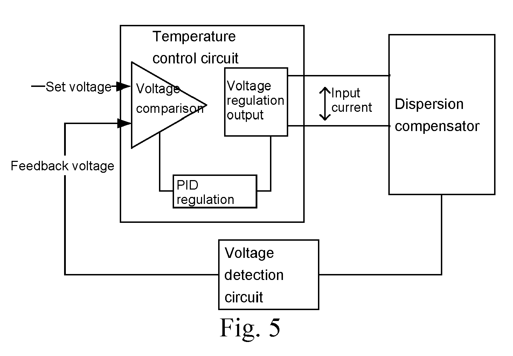

4) In present embodiment, each temperature control circuit is a negative feedback PID (Proportion, Integral, Differential coefficient) control circuit. Referring to Fig. 5, which is a structure schematic diagram of all functional units configured to achieve temperature control in the embodiment of the invention, one input end of the temperature control circuit is an output end of the DAC, and the other input end is an output end of the voltage detection circuit in the feedback voltage detection module corresponding thereto. The output of each temperature control circuit is sent to the two temperature control pins (e.g., Heater+, Heater-) of the dispersion compensator. If the difference between two input signals is 0, it indicates that the set value is reached and the output remains the current constant value. If the difference is not 0, the temperature control circuit regulates the potential relationship between two temperature control pins of the dispersion compensator according to the positive or negative difference so as to regulate the current direction. Tthe output duty ratio of pulse modulation signal is changed through the difference so as to regulate the output current. Two inputs are regulated towards to the direction in which the difference is 0. After the difference is 0, a level signal may be returned to the central control module, indicating that the temperature value at this point is locked, dispersion setting or wavelength regulation is ended. Through feedback control, the feedback voltage value is made to be equal to the set voltage value finally, and the system is locked. The rise or fall of temperature is realized within the dispersion compensator according to the size and direction of the current, which is finally reflected in different turning of grating inside the module or change of tightness of the optical fibre, thereby realizing the wavelength change and dispersion regulation of the dispersion compensator.

Obviously, those skilled in the art can make various alterations and variations to the invention without departing from the scope of the invention. In this way, if these modifications and variations fall within the scope of the claims of the invention and equivalent technology thereof, the invention is intended to contain these alterations and variations.

**Claims**

1. A device for regulating wave band of dispersion compensator, **characterized by** comprising:

a central control module, configured to determine a temperature value corresponding to a target wavelength to be configured, determine a corresponding wavelength regulation set voltage value according to the temperature value, and output the voltage value to a wavelength regulation temperature control module through a Digital-to-Analogue Converter (DAC);

a feedback voltage detection module, configured to determine a corresponding wavelength regulation feedback voltage value according to a current resistance value of a Resistance Temperature Detector (RTD) in the dispersion compensator, and input the wavelength regulation feedback voltage value to the wavelength regulation temperature control module; and

a wavelength regulation temperature control module, configured to regulate the potential relationship between wavelength regulation temperature control pins of the dispersion compensator according to the input wavelength regulation set voltage value and the input wavelength regulation feedback voltage value.

2. The device according to claim 1, **characterized in that** the device also comprises a dispersion compensation temperature control module;

the central control module is also configured to determine a temperature value corresponding to a target dispersion value to be configured, determine a corresponding dispersion regulation set voltage value according to the temperature value, and output the voltage value to the dispersion compensation temperature control module through the DAC;

the feedback voltage detection module is also configured to determine a corresponding dispersion regulation feedback voltage value according to the current resistance value of the RTD in the dispersion compensator, and input the dispersion regulation feedback voltage value to the dispersion compensation temperature control module;

the dispersion compensation temperature control module is configured to regulate the potential relationship between dispersion compensation temperature control pins of the dispersion compensator according to the dispersion regulation set voltage value input by the central control module and the dispersion regulation feedback voltage value input by the feedback voltage detection module.

3. The device according to claim 2, **characterized in that** the dispersion compensation temperature control module is also configured to feed back a level signal, which indicates the temperature value is locked, to the central control module when the difference between the input dispersion regulation set voltage value and the correspondingly input dispersion regulation feedback voltage value is zero, indicating the end of dispersion regulation.

4. The device according to any one of claims 1 to 3, **characterized in that** the wavelength regulation temperature control module is also configured to feed back a level signal, which indicates the temperature value is locked, to the central control module when the difference between the input wavelength regulation set voltage value and the input wavelength regulation feedback voltage value is zero, indicating the end of wavelength regulation.

5. A method for regulating wave band of dispersion compensator, **characterized by** comprising the following steps:

A, determining a temperature value corresponding to a target wavelength to be configured, determining a corresponding wavelength regulation set voltage value according to the temperature value, and performing digital-to-analogue conversion on the voltage value;

B, determining a current wavelength regulation feedback voltage value according to a current resistance value of a Resistance Temperature Detector (RTD) in the dispersion compensator; and

C, regulating the potential relationship between wavelength regulation temperature control pins of the dispersion compensator according to the wavelength regulation set voltage value obtained after the digital-to-analogue conversion and the current wavelength regulation feedback voltage value.

6. The method according to claim 5, **characterized in that**

the Step A also comprises the steps of: determining a temperature value corresponding to a target dispersion value to be configured, determining a corresponding dispersion regulation set voltage value according to the temperature value, and performing digital-to-analogue conversion on the voltage value;

the Step B also comprises the step of determining a current dispersion regulation feedback voltage value according to the current resistance value of the RTD in the dispersion compensator;

the Step C also comprises the step of regulating the potential relationship between dispersion compensation temperature control pins of the dispersion compensator according to the dispersion regulation set voltage value obtained after the digital-to-analogue conversion and the current dispersion regulation feedback voltage value.

7. The method according to claim 6, **characterized in that** the step of determining the temperature value corresponding to the target dispersion value to be configured comprises the step of determining the temperature value corresponding to the target dispersion value to be configured from a dispersion temperature corresponding table corresponding to the dispersion compensator.

8. The method according to claim 6, **characterized in that** in Step C, the dispersion regulation is ended when the difference between the dispersion regulation set voltage value and the corresponding dispersion regulation feedback voltage value is zero.

9. The method according to claim 5, **characterized in that** the step of determining the temperature value corresponding to the target wavelength to be configured comprises the step of determining the temperature value corresponding to the target wavelength to be configured according to a central wavelength of the dispersion compensator, the target wavelength to be configured and a wavelength regulation parameter of the dispersion compensator.

10. The method according to any one of claims 5 to 9, **characterized in that** in Step C, the wavelength regulation is ended when the difference between the wavelength regulation set voltage value and the wavelength regulation feedback voltage value is zero.

| | | Dispersion compensation temperature control module | | | |
|---|---|---|---|---|---|
| Central control module | DAC | Set voltage ► | Feedback voltage ◄ | Feedback voltage detection module | Dispersion compensator |
| | | Set voltage | Wavelength regulation temperature control module | Feedback voltage | |

Fig. 1

determining a temperature value corresponding to a target wavelength to be configured, determining a corresponding wavelength regulation set voltage value according to the temperature value, and performing digital-to-analogue conversion on the voltage value ⟶ S201

determining a current wavelength regulation feedback voltage value according to a current resistance value of an RTD in the dispersion compensator ⟶ S202

regulating the potential relationship between wavelength regulation temperature control pins of the dispersion compensator according to the wavelength regulation set voltage value obtained after the digital-to-analogue conversion and the current wavelength regulation feedback voltage value ⟶ S203

Fig. 2

Fig. 3

Fig. 4

Fig. 5

# INTERNATIONAL SEARCH REPORT

| International application No. |
| --- |
| PCT/CN2010/076485 |

## A.  CLASSIFICATION OF SUBJECT MATTER

See extra sheet

According to International Patent Classification (IPC) or to both national classification and IPC

## B.    FIELDS SEARCHED

Minimum documentation searched (classification system followed by classification symbols)

IPC: H04B, H04J

Documentation searched other than minimum documentation to the extent that such documents are included in the fields searched

Electronic data base consulted during the international search (name of data base and, where practicable, search terms used)

CNKI,CNPAT,WPI,EPODOC,IEEE,WDM, wavelength, division, multiplexing, dispersive, compensator, frequency, temperature, control, voltage, feedback

## C.  DOCUMENTS CONSIDERED TO BE RELEVANT

| Category* | Citation of document, with indication, where appropriate, of the relevant passages | Relevant to claim No. |
| --- | --- | --- |
| PX | CN101651494A(ZTE CORPORATION)17 Feb. 2010(17.02.2010)the whole document | 1-10 |
| X | CN1738222A(LUCENT TECHNOLOGIES INC.)22 Feb. 2006(22.02.2006) see description pages 3, 8-9 and figures 1, 2A and 2B | 1,4,5,9,10 |
| Y | See description pages 3, 8-9 and figures 1, 2A and 2B | 2,3,6-8 |
| Y | CN1207855C(SUMITOMO ELECTRIC IND., LTD.)22 Jun. 2005(22.06.2005)see abstract and description page 11 paragraph 4 | 2,3,6-8 |
| A | CN1305237C(FUJITSU LTD.)14 Mar. 2007(14.03.2007) the whole document | 1-10 |

☐ Further documents are listed in the continuation of Box C.          ☒ See patent family annex.

|  |  |
| --- | --- |
| *      Special categories of cited documents:<br><br>"A"   document defining the general state of the art which is not considered to be of particular relevance<br><br>"E"   earlier application or patent but published on or after the international filing date<br><br>"L"   document which may throw doubts on priority claim (S) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"    later document published after the international filing date or priority date and not in conflict with the application but cited to understand the principle or theory underlying the invention<br><br>"X"    document of particular relevance; the claimed invention cannot be considered novel or cannot be considered to involve an inventive step when the document is taken alone<br><br>"Y"    document of particular relevance; the claimed invention cannot be considered to involve an inventive step when the document is combined with one or more other such documents, such combination being obvious to a person skilled in the art<br><br>"&"document member of the same patent family |
| Date of the actual completion of the international search<br><br>25 Oct. 2010(25.10.2010) | Date of mailing of the international search report<br><br>**02 Dec. 2010 (02.12.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>CHEN, Jie<br><br>Telephone No. (86-10)62413441 |

Form PCT/ISA /210 (second sheet) (July 2009)

## INTERNATIONAL SEARCH REPORT
### Information on patent family members

International application No.

PCT/CN2010/076485

| Patent Documents referred in the Report | Publication Date | Patent Family | Publication Date |
|---|---|---|---|
| CN101651494A | 17.02.2010 | None | |
| CN1207855C | 22.06.2005 | WO0158057A1 | 09.08.2001 |
| | | AU7558600A | 14.08.2001 |
| | | US2001048798A1 | 06.12.2001 |
| | | EP1257076A1 | 13.11.2002 |
| | | KR20020074221A | 28.09.2002 |
| | | JP2001557202T2 | 24.06.2003 |
| CN1738222A | 22.02.2006 | EP1628150A1 | 22.02.2006 |
| | | US2006038975A1 | 23.02.2006 |
| | | JP2006072354A | 16.03.2006 |
| | | DE602005001370E | 26.07.2007 |
| CN1305237C | 14.03.2007 | EP1439647A2 | 21.07.2004 |
| | | JP2004222060A | 05.08.2004 |
| | | US2004141756A1 | 22.07.2004 |
| | | DE60311760E | 29.03.2007 |

Form PCT/ISA /210 (patent family annex) (July 2009)

# INTERNATIONAL SEARCH REPORT

International application No.

PCT/CN2010/076485

**CLASSIFICATION OF SUBJECT MATTER**

H04B 10/08 (2006.01) i

H04J 14/02 (2006.01) i